# EUROPEAN PATENT SPECIFICATION

(11) **EP 4 468 184 B1**
(45) Date of publication and mention of the grant of the patent: **29.04.2026**
(21) Application number: 23851252.9
(22) Date of filing: 20.04.2023
(51) Int. Cl.: G06F 21/51, G06F 3/0481, G06F 3/0488, G06F 3/04817, G06F 8/61

(54) **APPLICATION ICON VISUALIZATION METHOD AND DEVICE**
VERFAHREN UND VORRICHTUNG ZUR VISUALISIERUNG VON ANWENDUNGSSYMBOLEN
PROCÉDÉ ET DISPOSITIF DE VISUALISATION D'ICÔNE D'APPLICATION

(30) Priority: 12.08.2022 CN 202210968779
(43) Date of publication of application: 27.11.2024
(73) Proprietor: Honor Device Co., Ltd., Shenzhen, Guangdong 518040 (CN)
(72) Inventor: LI, Jiashan, Shenzhen, Guangdong 518040 (CN); WU, Pengchao, Shenzhen, Guangdong 518040 (CN)
(74) Representative: Goddar, Heinz J.
(86) International application number: PCT/CN2023/089581
(87) International publication number: WO 2024/032022

(56) References cited:
- CN-A- 103 679 028
- CN-A- 103 853 981
- CN-A- 103 853 981
- CN-A- 106 874 757
- CN-A- 107 273 168
- CN-A- 108 052 330
- CN-A- 112 307 466
- US-A1- 2014 089 857
- US-A1- 2015 113 652
- US-B1- 11 113 389
- US-B2- 11 055 406

## Description

### TECHNICAL FIELD

This application relates to the field of terminal technologies, and in particular, to a visualization method for an application icon and a device.

### BACKGROUND

A user may accidentally install a rogue application due to a misoperation while using a mobile phone, such as browsing a web page or downloading a file. Then, the mobile phone receives various advertisement screensavers, advertisement pop-up windows, and the like. Consequently, not only power consumption of the mobile phone is affected, but it is also possible to make the mobile phone become lagging, thereby affecting use experience of the user.

In addition, some rogue applications hide icons to reduce a risk of being uninstalled. To be specific, after the rogue application is installed on the mobile phone, the user cannot find an icon corresponding to the rogue application on a desktop of the mobile phone, and therefore, the user cannot uninstall the rogue application.
CN 103 853 981 A discloses a method and a device for discovering background networking and power consumption rogue software, wherein the method comprises the following steps: monitoring whether a networking request exists or not, and judging application software corresponding to each networking request through the process number of the networking request; recording the application name of each application software and the starting time and the ending time of each networking; calculating the total networking time of each application software, the networking time of each networking and the total networking time added by all the application software; when a user requests to check the networking time length, inquiring the total networking time length of each application software and the total networking time length added by all the application software, and displaying the total networking time length to the user; when a user requests to view a specific networking time period of certain application software, the starting time of each networking and the networking time of each networking of the application software in a preset time period are inquired and displayed to the user. The user can judge whether the application software is rogue software by looking at the networking duration and the detailed networking period.

Further prior art is known from CN 112 307 466 A, US 2014/089857 A1 and CN 108 052 330 A.

US 11113389 B1 discloses a method for providing persistent visual warnings for application launchers that includes (i) loading an application launcher into a sandbox, (ii) monitoring one or more functions of an application from the application launcher, (iii) querying a malware detection manager using information obtained from monitoring the functions of the application to determine whether the application is potentially harmful, and (iv) modifying, based on determining that the application is potentially harmful, an icon for the application launched from the sandbox to notify a user that the application is potentially harmful.

US11055406 B2 discloses a method that includes the steps of: monitoring whether an application software protection triggering condition is satisfied; if yes, judging whether current application software is malicious software; if yes, providing prompt information indicating that the current application software is malicious software; and when an opening continuing instruction for continuing to open the current application software is received, starting the current application software.

### SUMMARY

In view of this, this application provides a virtualization method for an application icon and a device, to visualize an icon of a rogue application, and guide a user to discover a rogue application and actively uninstall the rogue application. The invention is defined by the appended claims.

According to a first aspect, this application provides a virtualization method for an application icon. The method is applied to an electronic device and includes: determining a second list based on a first list in a preset condition, where the first list includes all applications installed on the electronic device, the second list includes non-system applications of all said applications whose installation sources are not an application market, and the second list includes a first application, wherein the first application is a non-system application whose installation source is not an application market; determining, based on attribute information of the first application, whether the first application is a rogue application; and in a case that the first application is a rogue application, replacing an original icon corresponding to the first application with a preset icon, displaying the preset icon at an application icon location of the first application on a desktop of the electronic device, where the preset icon is used to remind a user of the rogue application.

In the solution of this application, the second list is selected based on the first list in the preset condition. Compared with the first list, applications in the second list are significantly reduced, thereby reducing complexity of data processing. Then, whether the first application is a rogue application is determined based on the attribute information of the first application. In a case that the first application is a rogue application, the preset icon is obtained, and an original icon corresponding to the first application is replaced with the preset icon, so that an application icon of the first application is visualized, and the user is guided to discover the rogue application and actively uninstall the rogue application, to improve security of a mobile phone.

In a possible implementation, the second list does not include a determined rogue application. When the solution in this application is used for the second time to visualize an application icon, repeated determining of whether an application is a rogue application can be avoided, thereby improving processing efficiency.

In a possible implementation, the attribute information of the first application includes an application name of the first application and an application icon of the first application, and the determining, based on attribute information of the first application, whether the first application is a rogue application includes: when the application name of the first application is empty and the application icon of the first application is transparent, the first application is a rogue application. For a case in which an application icon of the rogue application is transparent, a method for determining the rogue application is provided.

In a possible implementation, the attribute information of the first application includes an action quantity and an action status of the first application, and the determining, based on attribute information of the first application, whether the first application is a rogue application includes: in a case that the action quantity of the first application is greater than 0 and the action status is disabled, the first application is a rogue application, where the action quantity is used to represent a quantity of to-be-executed actions of the first application, and the action status is used to represent a status of the to-be-executed action of the first application. For a case in which an application icon of the rogue application is displayed only once, a method for determining the rogue application is provided.

In a possible implementation, before the displaying a preset icon at an application icon location of the first application on a desktop of the electronic device, the method further includes: after preset duration, determining whether a white list includes the first application, where the white list includes a plurality of verified non-rogue applications; and if the white list does not include the first application, the first application is a rogue application. In this way, further determining may be performed on the determined rogue application, to improve correctness of the identified rogue application.

In a possible implementation, the first list includes application information of a plurality of applications, the application information includes an application package, an application name, an application icon, a first flag bit, a second flag bit, and a third flag bit, the first flag bit is used to identify whether an application is a rogue application, the second flag bit is used to identify whether an application is a system application, and the third flag bit is used to identify an installation source of an application.

In a possible implementation, after the case that the first application is a rogue application, the method further includes: updating a first flag bit that is of the first application and that is in the first list. A first identifier of the first application is modified, so that the electronic device may directly identify the first identifier during next determining, to avoid repeated determining and improve efficiency of data processing.

In a possible implementation, the preset condition includes that the electronic device is started and enters the desktop, an application on the electronic device returns to the desktop, an application is installed on the electronic device, and an application is uninstalled from the electronic device. In this way, a more comprehensive first list may be obtained, so that all applications and a new rogue application are obtained in a timely manner.

According to a second aspect, an electronic device is provided. The electronic device comprises a wireless communication module, a memory, and one or more processors, and the wireless communication module and the memory are coupled to the processor; wherein the memory is configured to store computer program code, the computer program code comprises computer instructions, and when the computer instructions are executed by the processor, the electronic device is enabled to perform the method according to the first aspect.

According to a third aspect, a computer-readable storage medium is provided. The computer-readable storage medium comprises computer instructions, wherein when the computer instructions are run on a first device, the electronic device is enabled to perform the method according to the first aspect.

### BRIEF DESCRIPTION OF DRAWINGS

FIG. 1A and FIG. 1B are a schematic display diagram 1 according to an embodiment of this application;
FIG. 2A, FIG. 2B, and FIG. 2C are a schematic display diagram 2 according to an embodiment of this application;
FIG. 3 is a schematic diagram of a hardware structure of an electronic device according to an embodiment of this application;
FIG. 4 is a schematic diagram of a software structure of an electronic device according to an embodiment of this application;
FIG. 5 is a schematic flowchart 1 of a visualization method for an application icon according to an embodiment of this application;
FIG. 6 is a schematic flowchart 2 of a visualization method for an application icon according to an embodiment of this application;
FIG. 7 is a schematic flowchart 3 of a visualization method for an application icon according to an embodiment of this application;
FIG. 8 is a schematic display diagram 3 according to an embodiment of this application; and
FIG. 9 is a schematic diagram of a structure of a chip system according to an embodiment of this application.

### DESCRIPTION OF EMBODIMENTS

It should be noted that terms "first" and "second" in embodiments of this application are merely used for the purpose of description, and should not be understood as an indication or implication of relative importance or an implicit indication of a quantity of indicated technical features. Therefore, a feature defined as "first" or "second" may explicitly or implicitly include one or more of the features.

Orientation terms such as "up", "down", "front", "back", "inside", "outside", "left", and "right" mentioned in the embodiments of this application merely refer to directions in the accompanying drawings, or are intended for better and clearer description and understanding of the embodiments of this application, and are not intended for indicating or implying that an indicated apparatus or element must have a specific orientation or constructed and operated in a specific orientation, and therefore shall not be construed as limitations on the embodiments of this application.

In the descriptions of the embodiments of this application, unless otherwise specified and defined explicitly, the term "connection" should be understood in a broad sense. For example, the "connection" may be a detachable connection or a non-detachable connection; or may be a direct connection or an indirect connection through an intermediate medium.

In the descriptions of embodiments of this application, the term "include", "contain", or any other variant thereof is intended to cover non-exclusive inclusion, so that a process, method, article, or apparatus that includes a series of elements includes not only those elements but also other elements that are not explicitly listed, or includes elements inherent to such a process, method, article, or apparatus. Without further limitation, an element defined by the sentence "including a..." does not exclude existence of other identical elements in the process, method, article, or apparatus including the element.

It is well known that an iOS system of Apple is a relatively closed system. All applications can only be downloaded from Apple Store for installation. In this way, a case in which a user installs a rogue application due to a misoperation can be effectively avoided. An Android (android) system is less closed, and an application has a wider downloading channel. The user often accidentally installs a rogue application during use. Due to the rogue application, phenomena such as a malicious lock-screen pop-up window and a background pop-up window appear on a mobile phone, and the mobile phone may even become lagging, and consequently, use experience of the user is affected.

Some existing rogue applications have an action of hiding icons. In this way, the user cannot find the rogue application on a desktop of a mobile terminal, and therefore cannot uninstall the rogue application. The rogue application hides the icon in the following two manners.

Manner 1: The icon of the rogue application is displayed on a desktop of the mobile phone, but the displayed icon is transparent.

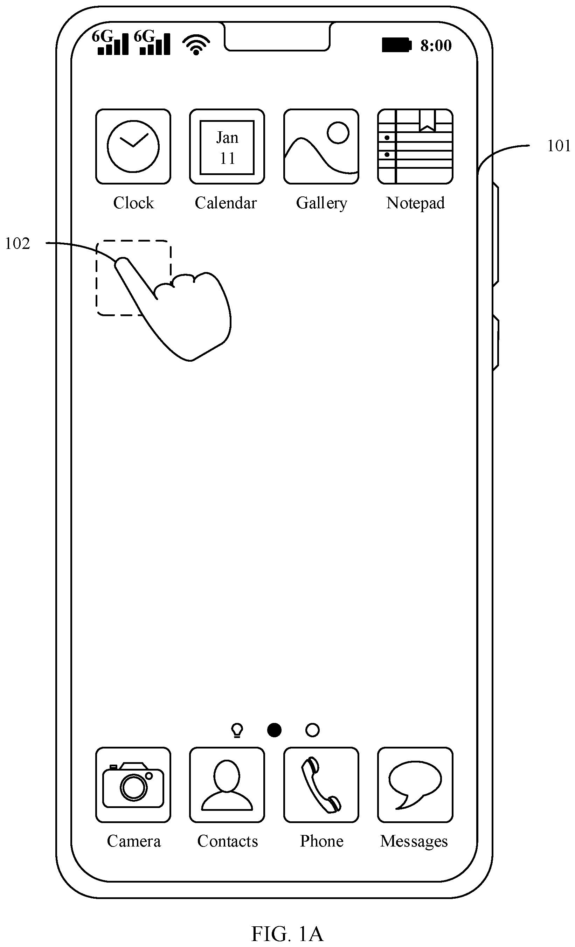

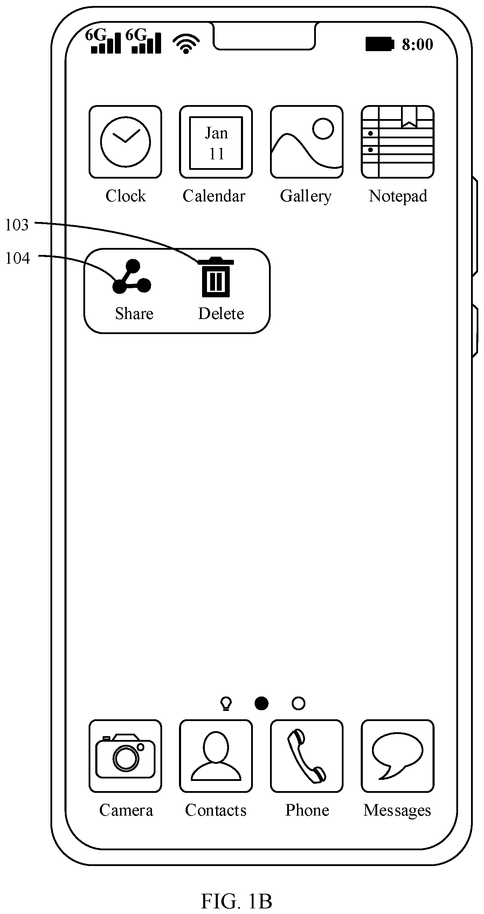

For example, as shown in FIG. 1A, the mobile phone may receive a tap operation performed by the user on an application icon location 102 on a home screen (that is, the desktop) 101 of the mobile phone, and the mobile phone may display, in response to the tap operation, a share icon 103 and an uninstall icon 104 shown in FIG. 1B. This may indicate that there is an application icon at the current location, but the application icon is transparent and the user cannot discover the application icon in a timely manner.

Manner 2: After the rogue application is installed for the first time, the application icon of the rogue application is displayed on the desktop of the mobile terminal, and after the rogue application is run once, the application icon of the rogue application is no longer displayed.

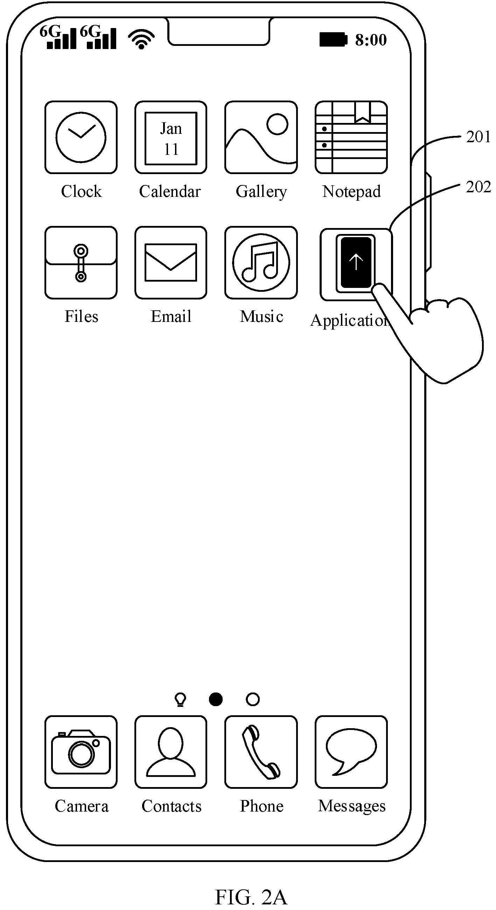

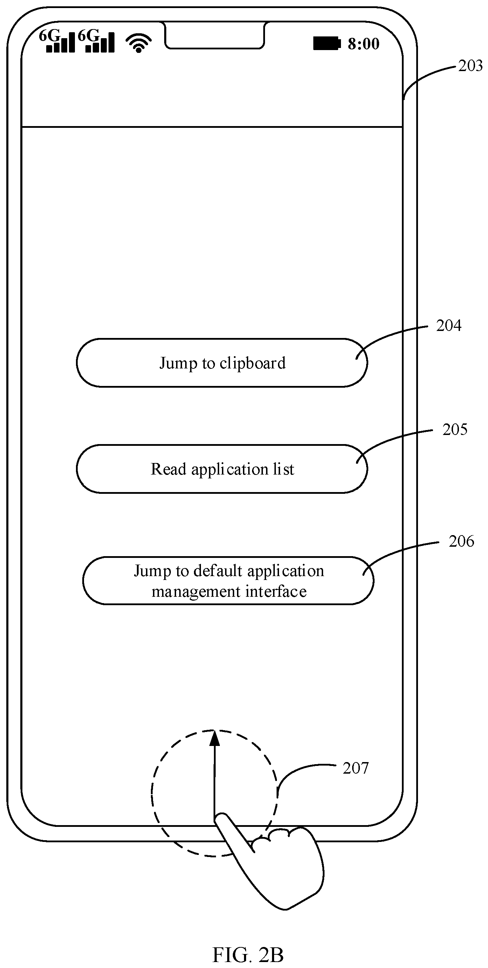

For example, as shown in FIG. 2A, the mobile phone receives a tap operation performed by the user on an application icon 202 of an application 1 on a home screen (that is, the desktop) 201 of the mobile phone. The mobile phone displays, in response to the tap operation, an interface 203 shown in FIG. 2B. The interface 203 may include a jump to clipboard button 204, a read application list button 205, and a jump to default application management interface button 206.

When the user does not use the application 1, the application 1 may be minimized by using a first touch operation. For example, as shown in FIG. 2B, a touch operation 207 is an operation in which a finger slides upward from a bottom of the application 1, and the first touch operation may include the touch operation 207. When detecting the touch operation 207, the mobile phone may confirm that the first touch operation is received. In addition, the first touch operation may be alternatively another operation, and this is not specially limited in this implementation.

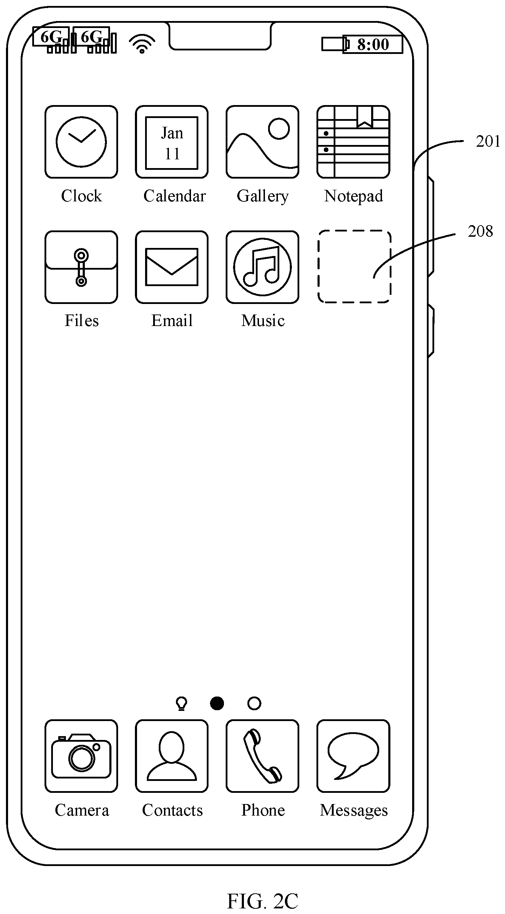

After minimization, the home screen 201 of the mobile phone is returned. In this case, as shown in FIG. 2C, the application icon of the application 1 is not displayed at a location 208 occupied by the application icon of the application 1 on the home screen 201 of the mobile phone, and the application icon of the application 1 is hidden.

Therefore, an embodiment of this application provides a visualization method for an application icon. In this method, a second list is selected based on a first list in a preset condition. Compared with the first list, applications in the second list are significantly reduced, thereby reducing complexity of data processing. Then, whether the first application is a rogue application is determined based on attribute information of the first application. In a case that the first application is a rogue application, a preset icon is obtained, and an original icon corresponding to the first application is replaced with the preset icon, so that the application icon of the first application is visualized, and a user is guided to discover the rogue application and actively uninstall the rogue application, to improve security of a mobile phone.

For example, an electronic device in the embodiments of this application may be a portable computer (for example, a mobile phone), a tablet computer, a notebook computer, a personal computer (personal computer, PC), a wearable electronic device (for example, a smart watch), an augmented reality (augmented reality, AR)/virtual reality (virtual reality, VR) device, a vehicle-mounted computer, a smart household device, or the like. A specific form of the electronic device is not specially limited in the embodiments.

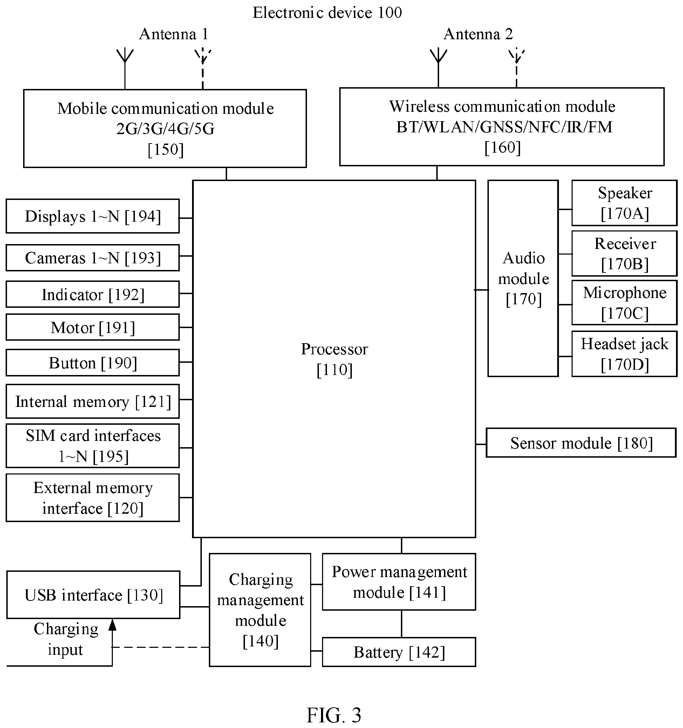

As shown in FIG. 3, the electronic device includes a hardware structure shown in FIG. 3. FIG. 3 is a schematic diagram of a structure of an electronic device 100 according to an embodiment of this application. As shown in FIG. 3, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It may be understood that the structure shown in this embodiment of this application does not constitute a specific limitation on an image collection device. In some other embodiments, the image collection device may include more or fewer components than those shown in the figure, some components may be combined, some components may be split, or components are arranged in different manners. The components shown in the figure may be implemented by using hardware, software, or a combination of software and hardware.

The processor 110 may include one or more processing units. For example, the processor 110 may include an application processor (application processor, AP), a Modem, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The charging management module 140 is configured to receive a charging input from a charger. The charger may be a wireless charger or a wired charger.

The power management module 141 is configured to be connected to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the image collection device may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the image collection device may be configured to cover one or more communication frequency bands. Different antennas may also be multiplexed to increase antenna utilization.

The mobile communication module 150 may provide a solution to wireless communication including 2G/3G/4G/5G and the like applied to the image collection device.

The wireless communication module 160 may provide a solution to wireless communication such as a wireless local area network (wireless local area networks, WLAN) (for example, a wireless fidelity (wireless fidelity, Wi-Fi) network), Bluetooth (bluetooth image collection device, BT), a global navigation satellite system (global navigation satellite system, GNSS), frequency modulation (frequency modulation image collection device, FM), near field communication (near field communication, NFC), or infrared (infrared, IR) applied to the image collection device. The wireless communication module 160 may be one or more components integrating at least one communication processing module. The wireless communication module 160 receives an electromagnetic wave through the antenna 2, performs frequency modulation and screening processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The image collection device implements a display function by using a GPU, the display 194, an application processor, and the like. The GPU is a microprocessor for image processing and is connected to the display 194 and the application processor.

The display 194 is configured to display an image, a video, and the like. The display 194 of the image collection device may display a series of graphical user interfaces (graphical user interface, GUI).

The image collection device may implement a photographing function by using the ISP, the camera 193, the video codec, the GPU, the display 194, the application processor, and the like.

The camera 193 is configured to capture a still image or a video.

The external memory interface 120 may be configured to connect to an external storage card, for example, a Micro SD card, to extend a storage capability of the image collection device.

The internal memory 121 may be configured to store computer-executable program code, and the executable program code includes instructions. The processor 110 executes various function applications and data processing of the image collection device by running the instructions stored in the internal memory 121.

The image collection device may implement an audio function, for example, music playback and recording, by using the audio module 170, the speaker 170A, the receiver 170B, the microphone 170C, the headset jack 170D, the application processor, and the like. The image collection device may further include the pressure sensor, the barometric pressure sensor, the gyroscope sensor, the magnetic sensor, the acceleration sensor, the distance sensor, the optical proximity sensor, the ambient light sensor, the fingerprint sensor, the temperature sensor, the touch sensor, the bone conduction sensor, the button 190, the motor 191, the indicator 192, and the like.

The SIM card interface 195 is configured to be connected to a SIM card. The SIM card may be inserted into the SIM card interface 195 or plugged out of the SIM card interface 195, to come into contact with or be separated from the image collection device. The image collection device may support one or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The SIM card interface 195 may be further compatible with the external memory card. The image collection device may interact with a network through the SIM card, to implement functions such as a call and data communication.

A software system of the electronic device may use a layered architecture, an event-driven architecture, a microkernel architecture, a microservice architecture, or a cloud architecture. In the embodiments of the present invention, an Android system with a layered architecture is used as an example to describe the software structure of the electronic device (such as a tablet computer).

In the layered architecture, software is divided into several layers, and each layer has a clear role and task. The layers communicate with each other through an interface. In some embodiments, the Android system may include an application layer, an application framework layer, an Android runtime (Android runtime) and a system library, a hardware abstraction layer (hardware abstraction layer, HAL), and a kernel layer. It should be noted that, the Android system is used as an example for description in the embodiments of this application. In another operating system (for example, an IOS system), the solutions of this application can still be implemented provided that functions implemented by functional modules are similar to those in the embodiments of this application.

The application layer may include a series of application packages.

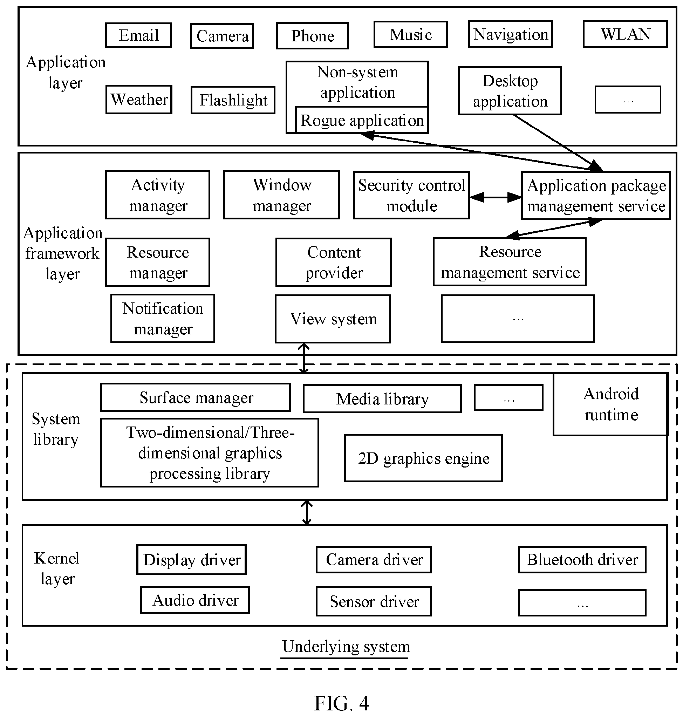

As shown in FIG. 4, the application packages may include applications such as Email, Camera, Phone, Music, Navigation, WLAN, Weather, Flashlight, a non-system application, and a desktop application. The non-system application may include a rogue application. Certainly, the application layer may further include another application package, such as Video, Bluetooth, Calendar, and a shopping application, and this is not limited in this application.

The application framework layer provides an application programming interface (application programming interface, API) and a programming framework for the applications at the application layer. The application framework layer includes some predefined functions.

The application framework layer may include an activity manager, a window manager, a content provider, a view system, a resource manager, a notification manager, a security control module, an application package management service (Package Manager Service, PMS), a resource management service, and the like. This is not limited in the embodiments of this application.

In the embodiments of this application, the application framework layer may further include the security control module, the PMS, the resource management service, and the like.

The security control module is configured to: check accuracy of a rogue application identified by the PMS, and send a check result to the PMS.

The PMS is configured to manage data of an application package installed in a mobile phone system, and is further configured to: identify the rogue application, and determine, based on the check result of the security control module, whether to obtain a preset icon corresponding to the rogue application from the resource management service.

The resource management service is configured to store resources, and provide a preset icon and an application icon of an application for the PMS.

The activity manager (Activity Manager) is configured to manage a lifecycle of each application. The application usually runs in an operating system in a form of an Activity. For each Activity, there is a corresponding application record (Activity Record) in the activity manager, the Activity Record records a status of an Activity of the application. The activity manager can use this Activity Record as an identifier to schedule an Activity process of the application.

The window manager (Window Manager Service) is configured to manage a graphical user interface (graphical user interface, GUI) resource used on a screen, and may be specifically configured to: obtain a size of the screen, create and delete a window, display and hide a window, lay out a window, manage a focus, manage an input method and a wallpaper, and the like.

The system library and the kernel layer below the application framework layer may be referred to as an underlying system, and the underlying system includes an underlying display system for providing a display service. For example, the underlying display system includes a display driver in the kernel layer, a surface manager in the system library, and the like.

The Android runtime (Android Runtime) includes a kernel library and a virtual machine. The Android Runtime is responsible for scheduling and management of the Android system. The kernel library includes two parts: One part is a functional function that needs to be invoked by a java language, and the other part is a kernel library of Android. The application layer and the application framework layer are run in the virtual machine. The virtual machine executes java files at the application layer and the application framework layer as binary files. The virtual machine is configured to perform functions such as lifecycle management of an object, stack management, thread management, security and exception management, and garbage collection.

The system library may include a plurality of functional modules, for example, a surface manager (surface manager), a media library (Media Libraries), a two-dimensional/three-dimensional graphics processing library (OpenGL ES), and a 2D graphics engine (SGL).

The surface manager is configured to manage a display subsystem, and provide fusion of 2D and 3D layers for a plurality of applications.

The media library supports playback and recording in a plurality of common audio and video formats, a still image file, and the like. The media library may support a plurality of audio and video encoding formats, such as MPEG4, H.264, MP3, AAC, AMR, JPG, and PNG.

The OpenGL ES is configured to implement three-dimensional graphics drawing, image rendering, composition, layer processing, and the like.

The SGL is a drawing engine for 2D drawing.

The kernel layer is a layer between hardware and software. The kernel layer includes at least a display driver, a camera driver, a Bluetooth driver, an audio driver, and a sensor driver. The hardware includes at least a speaker, a display, and Bluetooth.

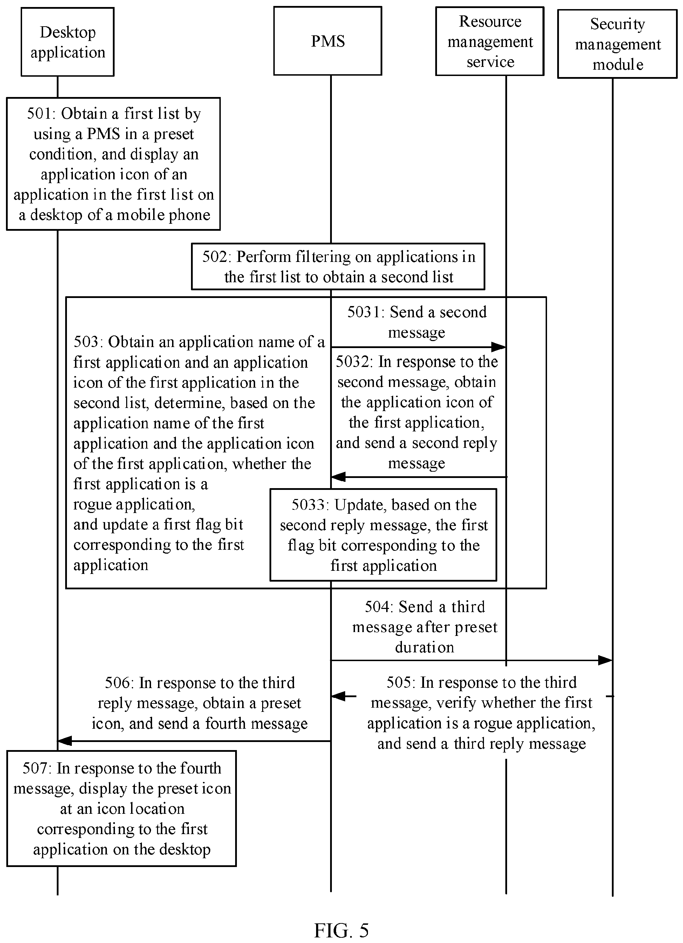

A visualization method for an application icon provided in the embodiments of this application is described below in detail with reference to the accompanying drawings. A mobile phone is used as an example of the foregoing electronic device. The mobile phone includes a desktop application, a PMS, a resource management service, and a security control module. As shown in FIG. 5, the visualization method for an application icon may include the following steps.

501: In a preset condition, the desktop application obtains a first list by using the PMS, and displays an application icon of an application in the first list on a desktop of the mobile phone.

The preset condition includes: The mobile phone is powered off first and then is restarted to enter the desktop; the mobile phone is restarted to enter the desktop during running; a new application is installed on the mobile phone; an application is uninstalled from the mobile phone; the mobile phone is flashed; the mobile phone is formatted; or the application in the mobile phone returns to the desktop of the mobile phone.

That the desktop application in the mobile phone obtains the first list by using the PMS, and displays the application icon of the application in the first list on the desktop of the mobile phone may include the following steps:

5011: The desktop application in the mobile phone sends a first message to the PMS.

The first message is used to obtain the first list.

After obtaining the first list, the desktop application in the mobile phone may display all applications in the first list on the desktop of the mobile phone based on application names of all the applications and application icons corresponding to the application names.

5012: In response to the first message, the PMS generates the first list and sends a first reply message to the desktop application.

The first reply message includes the first list. The first list includes application information of a plurality of applications, and the application information may include an application package, an application name, an application icon, a first flag bit, a second flag bit, a third flag bit, ..., an N^{th} flag bit, and the like. The first flag bit is used to indicate whether an application in the first list is a rogue application. The second flag bit is used to indicate whether an application in the first list is a system application or a non-system application. The third flag bit is used to identify a downloading source of an application in the first list. The non-system application is an application, other than the system application, installed on the mobile phone.

When this solution is used for the first time, the first flag bit in the first list is empty. After this solution is used once, the rogue application may be obtained. Then, the first flag bit in the first list may be updated based on the obtained rogue application. Therefore, the first flag bit in the first list may be empty or may not be empty.

Specifically, the PMS includes a Get Installed Applications access interface. The Get Installed Applications access interface may be configured to obtain all applications installed on the mobile phone. For example, when the PMS receives the first message of the desktop application, the PMS obtains all application package data in the mobile phone by using a get Installed Packages access interface. Specifically, the PMS traverses the get Installed Packages interface, and reads each piece of application package data in the get Installed Packages interface, to obtain the first list. For the first list, refer to Table 1.

**Table 1**

| Sequence number | Application name | First flag bit | Second flag bit | Third flag bit | ... | N^{th} flag bit |
|---|---|---|---|---|---|---|
| 1 | | isRogueAPP= True | Flag={update, ...} | installerPackageName= com.Model XX.appmarket | ... | |
| 2 | Shezhi | | Flag={system, update, ...} | installerPackageName= com.baidu.searchbox | ... | |
| 3 | Zhifubao | isRogueAPP= false | Flag={update, ...} | installerPackageName= com.Model XX.appmarket | ... | |
| ... | ... | ... | ... | ... | ... | |
| N | | isRogueAPP= false | Flag={update, ...} | installerPackageName= com.google.searchbox ... | ... | |

Specifically, the first flag bit is isRogueAPP. If the first flag bit isRogueAPP=true, it indicates that the application is a determined rogue application. If the first flag bit isRogueAPP=false, it indicates that it has been determined that the application is not a rogue application. If the first flag bit isRogueAPP is empty, it indicates whether the application is a rogue application is unclear.

The second flag bit is Flag. If the second flag bit Flag={system, update, ...}, that is, a Flag set includes system, the application is a system application. If the second flag bit Flag={update, ...}, that is, the Flag set does not include system, it indicates that the application is a non-system application.

The third flag bit is installerPackageName. If the third flag bit installerPackageName=com.model XX.appmarket, it indicates that the application is downloaded from an application market of a model XX. If the third flag bit installerPackageName=com.baidu.searchbox, it indicates that the application is downloaded through searching in Baidu; in other words, an installation source of the application is not an application market. Alternatively, the third flag bit installerPackageName may be com.google.searchbox, com.firefox.searchbox, or the like. This is not limited in this application.

5013: The desktop application displays the application icon of the application in the first list on the desktop of the mobile phone based on the first list in the first reply message.

Specifically, after obtaining the first list, the desktop application displays, on the desktop of the mobile phone, application names and application icons corresponding to all applications in the first list.

502: The PMS performs filtering on the applications in the first list to obtain a second list.

The second list includes at least one first application, and the first application is an application that meets a filtering condition.

In some embodiments, if 502 is performed for the first time, a filtering condition used by the PMS to perform filtering on the applications in the first list is: a non-system application whose installation source is not an application market in all the applications.

For example, a filtering process is: (1) non-system applications in all the applications; and (2) selecting, from the non-system applications, an application whose installation source is not an application market.

In some other embodiments, if 502 is not performed for the first time, the filtering condition is: an application, other than the determined rogue application, that is a non-system application and whose installation source is not an application market.

For example, a filtering process is: (1) selecting applications other than the determined rogue application; (2) selecting non-system applications from the applications other than the determined rogue application; and (3) selecting, from the non-system applications, an application whose installation source is not an application market.
(1) Applications other than the determined rogue application are selected.

With reference to the foregoing descriptions, the PMS may select the applications other than the determined rogue application based on a first flag bit of the application in the first list. The applications other than the determined rogue application may include a non-rogue application and an application for which whether the application is a rogue application is not sure. Specifically, a corresponding application for which the first flag bit isRogueAPP=false and a corresponding application for which the first flag bit is empty are considered as the applications other than the determined rogue application.

For example, as shown in Table 1, a first flag bit of an application corresponding to a sequence number 1 is isRogueAPP=true, and this indicates that the application corresponding to the sequence number 1 is a rogue application; a first flag bit isRogueAPP of an application corresponding to a sequence number 2 is empty, and this indicates whether the application corresponding to the sequence number 2 is a rogue application is not sure; a first flag bit of an application corresponding to a sequence number 3 is isRogueAPP=false, and this indicates that the application corresponding to the sequence number 3 is not a rogue application; and a first flag bit corresponding to an application whose sequence number is N is isRogueAPP=false, and this indicates that the application corresponding to the sequence number N is not a rogue application.

Therefore, the applications other than the determined rogue application that are selected by the PMS are the application corresponding to the sequence number 2, the application corresponding to the sequence number 3, and the application corresponding to the sequence number N.

After it is determined that the application corresponding to the sequence number 1 is marked as a rogue application, the PMS may obtain, by using the resource management service, an application icon of the application corresponding to the sequence number 1, and then compare the application icon of the application corresponding to the sequence number 1 with a preset icon. If it is learned through comparison that the application icon of the application corresponding to the sequence number 1 and the preset icon are consistent, this procedure ends. If it is learned through comparison that the application icon of the application corresponding to the sequence number 1 and the preset icon are inconsistent, the preset icon is obtained by using the resource management service, and the preset icon is sent to the desktop application, so that the desktop application replaces the application icon of the application corresponding to the sequence number 1 with the preset icon. The preset icon may be some icons that have a reminder function, for example, an exclamation mark or X. The preset icon may be alternatively redesigned based on an actual requirement, and this is not limited in this application.

(2) A non-system application in the applications other than the determined rogue application is selected.

The selected non-system application is obtained by further performing filtering on the applications other than the determined rogue application. Generally, applications are classified into a system application and a non-system application based on whether the application is an application of a system of the mobile phone. All system applications are not rogue applications by default. Therefore, after it is determined that the application other than the determined rogue application is a system application, the entire procedure ends.

Specifically, the PMS may select the non-system application based on a second flag bit of the application other than the determined rogue application in the first list. For example, the second flag bit is Flag. An application corresponding to the second flag bit Flag= {update, ...} is considered as a non-system application, and there is no system in a Flag set of the non-system application.

For example, with reference to Table 1, applications other than the determined rogue application are selected by using (1), and the selected applications other than the determined rogue application are the application corresponding to the sequence number 2, the application corresponding to the sequence number 3, and the application corresponding to the sequence number N.

A second flag bit of the application corresponding to the sequence number 2 is Flag= {system, update, ...}, and a Flag set includes system, which indicates that the application corresponding to the sequence number 2 is a system application. A second flag bit of the application corresponding to the sequence number 3 is Flag={update, ...}, and there is no system in a Flag set, which indicates that the application corresponding to the sequence number 3 is a non-system application. A second flag bit of the application corresponding to the sequence number N is Flag={update, ...}, and there is no system in a Flag set, which indicates that the application corresponding to the sequence number N is a non-system application. Therefore, non-system applications selected by the PMS are the application corresponding to the sequence number 3 and the application corresponding to the sequence number N.

(3) An application whose installation source is not an application market is selected from the non-system applications.

After the non-system applications are selected, the application whose installation source is not an application market is selected from the non-system applications. Generally, it is considered by default that all applications installed by using the application market are verified and secure applications. If an application is not installed by using the application market, other information of the application needs to be further determined, to determine whether the application is a rogue application.

Specifically, the PMS may select, based on a third flag bit of the non-system application in the first list, the application whose installation source is not an application market. For example, the third flag bit is installerPackageName. It is considered that an installation source of an application other than an application corresponding to a third flag bit installerPackageName=com.model XX.appmarket is not an application market.

For example, with reference to Table 1, the applications other than the determined rogue application are selected by using (1) and the non-system applications are selected from the applications other than the determined rogue application by using (2). The selected non-system applications are the application corresponding to the sequence number 3 and the application corresponding to the sequence number N.

A third flag bit installerPackageName=com.model XX.appmarket of the application corresponding to the sequence number 3 indicates that an installation source of the application corresponding to the sequence number 3 is an application market of a model XX. A third flag bit installerPackageName=com.google.searchbox... of the application corresponding to the sequence number N indicates that an installation source of the application corresponding to the sequence number N is a search box of Google, and is not an application market. Therefore, the second list finally selected by the PMS includes only the application corresponding to the sequence number N. The second list is shown in Table 2.

**Table 2**

| Sequence number | Application name | First flag bit | Second flag bit | Third flag bit | ... | N^{th} flag bit |
|---|---|---|---|---|---|---|
| N | | isRogueAPP=false | Flag={update, ...} | installerPackageName= com.google.searchbox ... | ... | |

It should be noted that, not all of the foregoing (1) selecting the applications other than the determined rogue application, (2) selecting the non-system applications from the applications other than the determined rogue application, and (3) selecting, from the non-system applications, the application whose installation source is not an application market need to be performed. After (1) selecting the applications other than the determined rogue application is performed, if no application other than the determined rogue application is found, the entire procedure ends. After (1) selecting the applications other than the determined rogue application and (2) selecting the non-system applications from the applications other than the determined rogue application are performed, if no non-system application is found, the entire procedure ends. After (1) selecting the applications other than the determined rogue application, (2) selecting the non-system applications from the applications other than the determined rogue application, and (3) selecting, from the non-system applications, the application whose installation source is not an application market are performed, if no application whose installation source is not an application market is found, the entire procedure ends.

A sequence of performing the foregoing filtering procedure is not fixed. The foregoing filtering procedure may be alternatively (1) selecting applications other than the determined rogue application, (2) selecting, from the applications other than the determined rogue application, applications whose installation sources are not an application market, and (3) selecting a non-system application from the applications whose installation sources are not an application market.

Alternatively, the foregoing filtering procedure is (1) selecting non-system applications, (2) selecting applications other than the determined rogue application from the non-system applications, and (3) selecting, from the applications other than the determined rogue application, an application whose installation source is not an application market.

Alternatively, the foregoing filtering procedure is (1) selecting non-system applications, (2) selecting, from the non-system applications, applications whose installation sources are not an application market, and (3) selecting an application other than the determined rogue application from the applications whose installation sources are not an application market.

Alternatively, the foregoing filtering procedure is (1) selecting applications whose installation sources are not an application market, (2) selecting applications other than the determined rogue application from the applications whose installation sources are not an application market, and (3) selecting a non-system application from the applications other than the determined rogue application.

Alternatively, the foregoing filtering procedure is (1) selecting applications whose installation sources are not an application market, (2) selecting non-system applications from the applications whose installation sources are not an application market, and (3) selecting an application other than the determined rogue application from the non-system applications.

503: The PMS obtains an application name of the first application and an application icon of the first application in the second list, determines, based on the application name of the first application and the application icon of the first application, whether the first application is a rogue application, and updates the first flag bit corresponding to the first application.

The PMS obtains the application name of the first application and action data of the first application from the first list, and obtains the application icon of the first application from the resource management service. The PMS may alternatively obtain the application name of the first application and the action data of the first application by using the second list.

Determining, based on the application name of the first application and the application icon of the first application, whether the first application is a rogue application is specifically: The PMS may first determine whether the application name of the first application is empty, and further determine, based on whether the application name is empty, whether the application icon of the first application is transparent, and if the application icon of the first application is transparent, the first application is a rogue application. Alternatively, whether the application icon of the first application is transparent may be determined first; and based on that the application icon of the first application is transparent, whether the application name of the first application is empty is further determined; and if the application name of the first application is empty, the first application is a rogue application. Alternatively, whether the application name of the first application is empty and whether the application icon of the first application is transparent are determined simultaneously, and when the application name of the first application is empty and the application icon of the first application is transparent, the first application is a rogue application.

The obtaining the application icon of the first application from the resource management service may include the following steps:

5031: The PMS sends a second message to a resource management server.

The second message is used to request to obtain the application icon of the first application from the resource management service. The second message includes a UID of the first application.

5032: In response to the second message, the resource management service obtains the application icon of the first application, and sends a second reply message to the PMS.

The second reply message includes the application icon of the first application.

5033: The PMS updates, based on the second reply message, the first flag bit corresponding to the first application.

The PMS obtains the application icon of the first application based on the second reply message, and then determines whether the application icon of the first application is transparent. Specifically, the application icon may be set to transparent in a plurality of manners. For example, if an alpha value of the application icon of the first application is set to 0%, the application icon of the first application is transparent. Alternatively, if the application icon of the first application is set to a transparent image, the application icon of the first application is transparent. Alternatively, the application icon of the first application may be set in another manner. This is not limited in this application.

Finally, it is determined, based on whether the application icon is transparent and the application name of the first application, whether the first application is a rogue application. When the application name of the first application is empty and the application icon of the first application is transparent, it is determined that the first application is a rogue application, and then the PMS modifies data of the first flag bit of the first application to make the first flag bit isRogueAPP=true.

Alternatively, when it is determined that the application name of the first application is empty and the application icon of the first application is not transparent, it is determined that the first application is not a rogue application.

Alternatively, when it is determined that the application name of the first application is not empty, it is determined that the first application is not a rogue application.

For example, it may be learned with reference to Table 2 and 502 that the second list includes only the application corresponding to the sequence number N, and the PMS may query, in the first list, an application name of the application corresponding to the sequence number N, or may query, in the second list, the application name of the application corresponding to the sequence number N. It can be learned through query that the application name of the application corresponding to the sequence number N is empty, and therefore, whether an application icon of the application corresponding to the sequence number N is transparent is further determined. Whether the application icon of the application corresponding to the sequence number N is transparent needs to be determined by the PMS by using the resource management service.

Specifically, that the PMS determines, by using the resource management service, whether the application icon of the application corresponding to the sequence number N is transparent includes the following steps:
(1) The PMS sends an obtaining request to the resource management server.

The obtaining request is used to request to obtain, from the resource management service, the application icon of the application corresponding to the sequence number N. The obtaining request includes a UID of the application corresponding to the sequence number N.

(2) In response to the obtaining request, the resource management service obtains the application icon of the application corresponding to the sequence number N, and returns an obtaining result to the PMS.

The application icon of the application corresponding to the sequence number N is displayed in the obtaining result.

(3) The PMS adjusts, based on the obtaining result, a first flag bit of the application corresponding to the sequence number N.

The PMS obtains, based on the obtaining result, the application icon of the application corresponding to the sequence number N, and then determines whether the application icon of the first application is transparent. Finally, based on a result of determining whether the application icon is transparent and with reference to the application name of the application corresponding to the sequence number N, whether the application corresponding to the sequence number N is a rogue application is determined.

When it is determined that the application name of the application corresponding to the sequence number N is empty and the application icon of the application corresponding to the sequence number N is transparent, it is determined that the application corresponding to the sequence number N is a rogue application, and then, the PMS modifies data of the first flag bit of the application corresponding to the sequence number N to make the first flag bit isRogueAPP=true.

Optionally, if the first application is not a rogue application, the procedure ends, and if the first application is a rogue application, the following steps continue to be performed.

504: After preset duration, the PMS sends a third message to the security control module.

The third message is used to request the security control module to verify whether the first application is a rogue application, and the third message includes information about the first application.

Specifically, if the PMS determines that the first application is a rogue application, the PMS reports the information about the first application to the security control module by using the third message, and the reported information about the first application includes a package name of the first application and an action category of the first application. The action category of the first application includes a first category or a second category. The first category is that the application name is empty and the application icon is transparent. The second category is that an action quantity is greater than 0 and an action status is disabled.

For example, in a scenario in which the mobile phone is restarted, a wake-up speed of the PMS is earlier than that of the security control module. After the PMS determines that the first application is a rogue application, the PMS needs to wait for the preset duration. After the preset duration, the PMS sends the third message to the security control module, to ensure that the security control module has run normally and can receive the third message. Specifically, when the PMS determines that the first application is a rogue application, preset duration of 5 minutes is set, and then the third message is sent to the security control module. The third message includes a package name of the application corresponding to the sequence number N and an action category of the application corresponding to the sequence number N, and the action category of the application corresponding to the sequence number N is the first category.

505: In response to the third message, the security control module verifies whether the first application is a rogue application, and sends a third reply message to the PMS.

After receiving the third message, the security control module checks the information that is about the first application and that is reported by the PMS, so that the PMS does not mistakenly consider plug-ins of some applications as rogue applications. In this way, a more accurate identification result can be obtained.

The security control module stores a white list, and the white list includes a plurality of verified non-rogue applications. For example, the white list includes a package name of an application, a plug-in of an application, and the like. That the security control module checks the information that is about the rogue application and that is reported by the PMS is specifically: The security control module compares a package name of the rogue application reported by the PMS with a package name pre-stored in the white list. If consistent package names are obtained through comparison, it is considered that the PMS performs incorrect determining, and the application reported by the PMS is not a rogue application. If no consistent package names are found after comparison, it is determined that the PMS performs correct determining, and the application reported by the PMS is a rogue application.

After obtaining a determining result, the security control module sends the third reply message to the PMS, and the third reply message includes that the first application is a rogue application or the first application is not a rogue application.

In a case that a check result sent by the security control module is that the first application is a rogue application, the following steps continue to be performed.

For example, with reference to 504, the security control module compares the package name of the application corresponding to the sequence number N with a package name of an application in the white list. If a package name consistent with the package name of the application corresponding to the sequence number N is not found in the white list, it is considered that the PMS performs correct determining, and the application that is corresponding to the sequence number N and that is reported by the PMS is a rogue application.

506: In response to the third reply message, the PMS obtains a preset icon from the resource management service, and sends a fourth message to the desktop application.

The preset icon is used to remind a user that a current application is a rogue application. The preset icon is an icon designed for the rogue application. The fourth message is used to indicate the desktop application to display an updated icon of the first application, and the updated icon is the preset icon. The fourth message includes the preset icon and an association relationship between the preset icon and the first application, and the association relationship between the preset icon and the first application is established by the PMS.

For example, the PMS obtains the preset icon from the resource management service, establishes an association relationship between the preset icon and the application corresponding to the sequence number N, and then sends the fourth message to the desktop application.

Specifically, that the PMS obtains the preset icon from the resource management service in response to the third reply message includes the following sub-steps:

5061: The PMS sends a fifth message to the resource management service in response to the third reply message.

The fifth message is used to request the resource management service to provide a preset icon corresponding to the rogue application for the PMS.

5062: In response to the fifth message, the resource management service searches for the preset icon corresponding to the rogue application, and sends a fifth reply instruction to the PMS.

The fifth reply instruction includes the preset icon.

507: In response to the fourth message, the desktop application displays the preset icon at an application icon location of the first application on a desktop.

In response to the fourth message, the desktop application replaces an original transparent icon corresponding to the first application with the preset icon, to visualize and expose the first application, and remind the user of suspicion of the first application, thereby guiding the user to discover the rogue application and actively uninstall the rogue application.

Based on the foregoing technical solution corresponding to 501-507, when the desktop application updates and displays application icons of all applications in the mobile phone, the PMS performs preliminary filtering on all the applications in the mobile phone. Specifically, the application other than the determined rogue application is first selected based on the obtained first list; then, the non-system application is selected on the basis of the application other than the determined rogue application; and finally, the application whose installation source is not an application market is selected on the basis of the non-system application, to obtain the second list. Compared with the first list, applications in the second list are significantly reduced, thereby reducing complexity of data processing. Then, the PMS further determines whether the first application in the second list is a rogue application. Specifically, the PMS determines whether the application name of the first application is empty and whether the application icon of the first application is transparent; when the application name of the first application is empty and the application icon of the first application is transparent, the PMS considers that the first application is a rogue application, and modifies a first identifier of the first application; and when determining the rogue application next time, the PMS may directly identify the first identifier, thereby avoiding repeated determining, and improving efficiency of data processing. After the rogue application is identified, the PMS obtains the preset icon by using the resource management service, and indicates the desktop application to replace an original icon corresponding to the rogue application with the preset icon, so that the application icon of the rogue application is visualized, to guide the user to discover the rogue application and actively uninstall the rogue application, thereby improving security of the mobile phone.

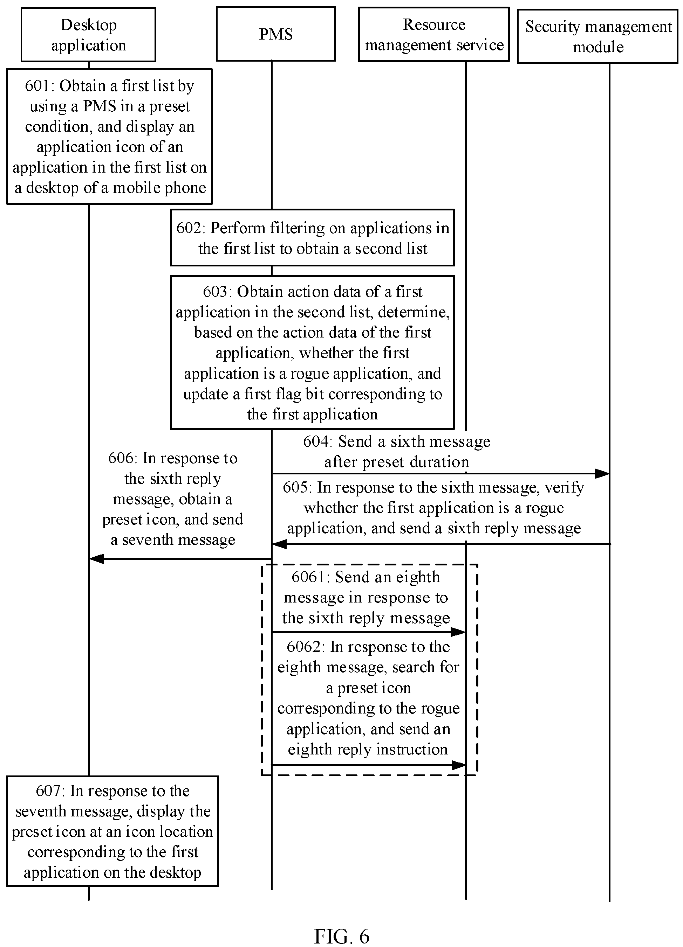

Another visualization method for an application icon provided in the embodiments of this application is described below in detail with reference to the accompanying drawings. A mobile phone is used as an example of the foregoing electronic device. As shown in FIG. 6, the visualization method for an application icon may include the following steps.

601: In a preset condition, a desktop application obtains a first list by using a PMS, and displays an application icon of an application in the first list on a desktop of the mobile phone.

For specific content, refer to 501 and 5011-5013. Details are not described herein again.

602: The PMS performs filtering on applications in the first list to obtain a second list.

For specific content, refer to 502. Details are not described herein again.

603: The PMS obtains action data of a first application in the second list, determines, based on the action data of the first application, whether the first application is a rogue application, and updates a first flag bit corresponding to the first application.

The action data includes an action quantity and an action status. The action quantity is used to represent a quantity of to-be-executed actions of the first application, and the action status is used to represent a status of the to-be-executed action of the first application.

The PMS may obtain the action data of the first application by using the first list or the second list. The action quantity may be determined by using a quantity that an action is main and a category is launcher. That the action is main is determined by using android.intent.action.MAIN code. That the category is launcher is determined by using android.intent.category.LAUNCHER code. android.intent.action.MAIN determines an action that is started by the first application first. android.intent.category.LAUNCHER determines whether the first application is displayed on a desktop of the mobile phone.

After the action quantity is determined, in a case that the action quantity is greater than 0, an action status of an action in the first application is further determined. When the action status is a disabled (that is, disable) state, it is considered that the first application is a rogue application. Then, the PMS modifies data of the first flag bit of the first application, to make the first flag bit isRogueAPP=true.

When the action quantity is greater than 0, but the action status is a running state, it is considered that the application is not a rogue application.

604: After preset duration, the PMS sends a sixth message to a security control module.

The sixth message is used to request the security control module to verify whether the first application is a rogue application, and the sixth message includes information about the first application.

For specific content, refer to 504. Details are not described herein again.

605: In response to the sixth message, the security control module verifies whether the first application is a rogue application, and sends a sixth reply message to the PMS.

For specific content, refer to 505. Details are not described herein again.

606: In response to the sixth reply message, the PMS obtains a preset icon from a resource management service, and sends a seventh message to the desktop application.

For specific content, refer to 506.

The obtaining the preset icon from the resource management service specifically includes the following steps:

6061: The PMS sends an eighth message to the resource management service in response to the sixth reply message.

The eighth message is used to request the resource management service to provide a preset icon corresponding to the rogue application for the PMS.

6062: In response to the eighth message, the resource management service searches for the preset icon corresponding to the rogue application, and sends an eighth reply instruction to the PMS.

The eighth reply instruction includes the preset icon.

607: In response to the seventh message, the desktop application displays the preset icon at an application icon location of the first application on the desktop.

For specific content, refer to 507. Details are not described herein again.

Based on the foregoing technical solution corresponding to 601-607, when the desktop application updates and displays application icons of all applications in the mobile phone, the PMS performs preliminary filtering on all the applications in the mobile phone. Specifically, an application other than the determined rogue application is first selected based on the obtained first list; then, a non-system application is selected on the basis of the application other than the determined rogue application; and finally, an application whose installation source is not an application market is selected on the basis of the non-system application, to obtain the second list. Compared with the first list, applications in the second list are significantly reduced, thereby reducing complexity of data processing. Then, the PMS further determines whether the first application in the second list is a rogue application. Specifically, the PMS determines whether the action quantity of the first application is greater than 0; when the action quantity of the first application is greater than 0 and an action status of an action of the first application is disabled, the PMS considers that the first application is a rogue application, and modifies a first identifier of the first application; and when determining the rogue application next time, the PMS may directly identify the first identifier, thereby avoiding repeated determining, and improving efficiency of data processing. After the rogue application is identified, the PMS obtains the preset icon by using the resource management service, and indicates the desktop application to replace an original icon corresponding to the rogue application with the preset icon, so that the application icon of the rogue application is visualized, to guide a user to discover the rogue application and actively uninstall the rogue application, thereby improving security of the mobile phone.

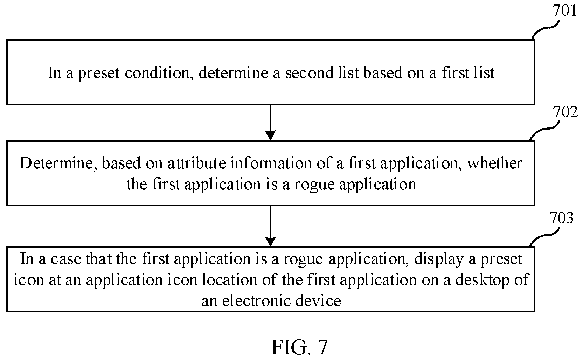

Another visualization method for an application icon provided in the embodiments of this application is described below in detail with reference to the accompanying drawings. As shown in FIG. 7, the visualization method for an application icon may include the following steps.

701: In a preset condition, an electronic device determines a second list based on a first list.

The preset condition includes that the electronic device is started and enters a desktop, an application in the electronic device returns to the desktop, an application is installed in the electronic device, and an application is uninstalled from the electronic device.

The first list includes application information of a plurality of applications, the application information includes an application package, an application name, an application icon, a first flag bit, a second flag bit, and a third flag bit, the first flag bit is used to identify whether an application is a rogue application, the second flag bit is used to identify whether an application is a system application, and the third flag bit is used to identify an installation source of an application.

The second list includes all applications installed on the electronic device, the second list includes a non-system application whose installation source is not an application market in all the applications, and the second list includes a first application. The second list is obtained for the first time.

Optionally, the second list does not include a determined rogue application. When the solution corresponding to this application is not used for the first time, the second list does not include the determined rogue application.

For specific content, refer to 501, 5011-5013, and 502. Details are not described herein again.

702: The electronic device determines, based on attribute information of the first application, whether the first application is a rogue application.

In some embodiments, 702 includes the following step:

7021: When an application name of the first application is empty and an application icon of the first application is transparent, the first application is a rogue application. The attribute information of the first application includes the application name of the first application and the application icon of the first application.

For specific content, refer to 503 and 5031-5033. Details are not described herein again.

In some other embodiments, 702 includes the following step:

7022: In a case that an action quantity of the first application is greater than 0 and an action status is disabled, the first application is a rogue application. The attribute information of the first application includes the action quantity and the action status of the first application, the action quantity is used to represent a quantity of to-be-executed actions of the first application, and the action status is used to represent a status of the to-be-executed action of the first application.

For specific content, refer to 603. Details are not described herein again.

703: In a case that the first application is a rogue application, the electronic device displays a preset icon at an application icon location of the first application on the desktop of the electronic device, where the preset icon is used to remind a user of the rogue application.

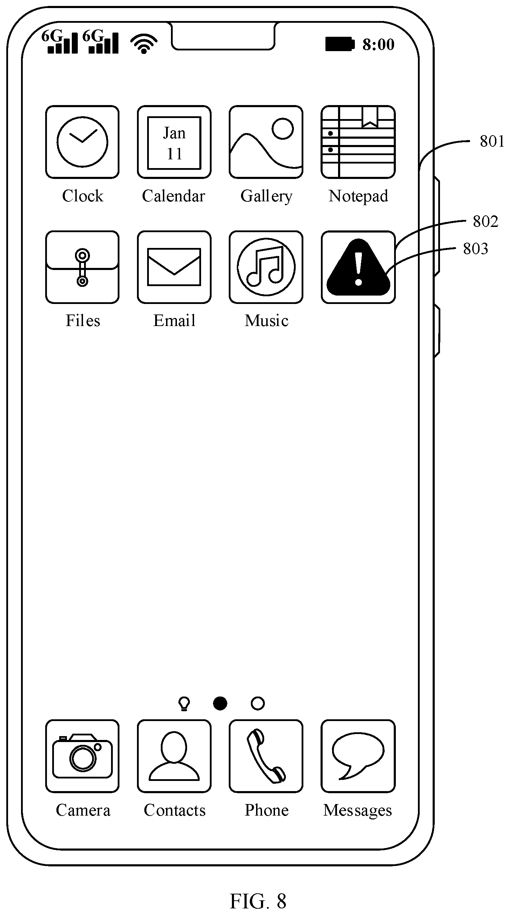

For example, with reference to FIG. 2A, FIG. 2B, and FIG. 2C, when the electronic device detects that an application 1 is a rogue application, an icon of the application 1 is replaced with the preset icon, and a home screen 801 of a mobile phone shown in FIG. 8 is displayed. The home screen 801 displays a preset icon 803 at a display location 802 of the application icon of the application 1.

For specific content, refer to 506, 5061-5062, and 507, or refer to 606, 6061-6062, and 607. Details are not described herein again.

Optionally, after 702, the method further includes the following steps.

7023: After preset duration, determine whether a white list includes the first application.

The white list includes a plurality of verified non-rogue applications. The preset duration is 5 minutes.

7024: If the white list does not include the first application, the first application is a rogue application.

Optionally, after the case that the first application is a rogue application, the method further includes: updating a first flag bit of the first application in the first list.

For specific content, refer to 504 and 505. Details are not described herein again.

In some embodiments, the electronic device may determine the second list based on the first list in the preset condition, where the first list includes all applications installed on the electronic device, the second list includes a non-system application whose installation source is not an application market in all the applications, and the second list includes the first application; then, the electronic device determines, based on the application name of the first application and the application icon of the first application, whether the first application is a rogue application; and in a case that the first application is a rogue application, the electronic device displays the preset icon at the application icon location of the first application on the desktop of the electronic device, where the preset icon is used to remind the user of the rogue application.

The determining, based on the application name of the first application and the application icon of the first application, whether the first application is a rogue application may include: when the application name of the first application is empty and the application icon of the first application is transparent, the first application is a rogue application.

In some other embodiments, the electronic device may determine the second list based on the first list in the preset condition, where the first list includes all applications installed on the electronic device, the second list includes a non-system application whose installation source is not an application market in all the applications, and the second list includes the first application; then, the electronic device determines, based on the action quantity and the action status of the first application, whether the first application is a rogue application, where the action quantity is used to indicate the quantity of to-be-executed actions of the first application, and the action status is used to indicate the status of the to-be-executed action of the first application; and in a case that the first application is a rogue application, the electronic device displays the preset icon at the application icon location of the first application on the desktop of the electronic device, where the preset icon is used to remind the user of the rogue application.

The determining, based on the action quantity and the action status of the first application, whether the first application is a rogue application may include: in a case that the action quantity of the first application is greater than 0 and the action status is disabled, the first application is a rogue application.

To implement the foregoing functions, the electronic device includes corresponding hardware structures and/or software modules for performing the functions. Persons skilled in the art may be easily aware that, in combination with example units and algorithm steps described in the embodiments disclosed in this specification, the embodiments of this application can be implemented by hardware or a combination of hardware and computer software. Whether a specific function is performed by hardware or hardware driven by computer software depends on a particular application and a design constraint condition of the technical solutions. Persons skilled in the art may use different methods to implement the described functions for each specific application, but it should not be considered that such an implementation goes beyond the scope of this application.

In the embodiments of this application, the electronic device may be divided into functional modules based on the foregoing method examples. For example, each functional module may be obtained through division for a corresponding function, or two or more functions may be integrated into one processing module. The integrated module may be implemented in a form of hardware, or may be implemented in a form of a software functional module. It should be noted that division of the modules in the embodiments of this application is an example, and is merely logical function division. During actual implementation, there may be another division manner.

Some other embodiments of this application further provide an electronic device, and the electronic device may include a communication module, a memory, and one or more processors. The communication module and the memory are coupled to the processor. The memory is configured to store computer program code, and the computer program code includes computer instructions.

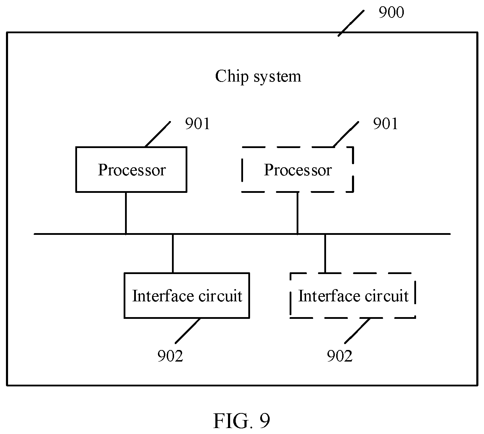

An embodiment of this application further provides a chip system. As shown in FIG. 9, the chip system 900 includes at least one processor 901 and at least one interface circuit 902. The processor 901 and the interface circuit 902 may be connected to each other through a line. For example, the interface circuit 902 may be configured to receive a signal from another apparatus (for example, a memory of an electronic device). For another example, the interface circuit 902 may be configured to send a signal to another apparatus (for example, the processor 901).

For example, the interface circuit 902 may read the instructions stored in the memory, and send the instructions to the processor 901. When executed by the processor 901, the instructions may enable the electronic device to perform the steps in the foregoing embodiments. Certainly, the chip system may further include other discrete components. This is not specifically limited in the embodiments of this application.

An embodiment of this application further provides a computer-readable storage medium, the computer-readable storage medium includes computer instructions, and when the computer instructions are run on a second electronic device, the second electronic device is enabled to perform the functions performed by the second electronic device (for example, the mobile phone) in the foregoing method embodiments.

An embodiment of this application further provides a computer program product, and when the computer program product runs on a computer, the computer is enabled to perform the functions performed by the second electronic device (for example, the mobile phone) in the foregoing method embodiments.

It may be clearly learned by persons skilled in the art from the foregoing descriptions of the implementations that for convenience and brevity of description, only division into the foregoing functional modules is used as an example for description. In actual application, the foregoing functions may be allocated to different functional modules for implementation based on a requirement, that is, an internal structure of an apparatus is divided into different functional modules, to complete all or some of the functions described above.

In the several embodiments provided in this application, it should be understood that the disclosed apparatus and methods may be implemented in other manners. For example, the described apparatus embodiment is merely an example. For example, the division into the modules or units is merely a logical function division, and there may be another division manner in actual implementation. For example, a plurality of units or components may be combined or integrated into another apparatus, or some features may be ignored or not performed. In addition, the displayed or discussed mutual couplings, direct couplings, or communication connections may be implemented by using some interfaces. The indirect couplings or communication connections between the apparatuses or units may be implemented in an electrical, mechanical, or another form.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes various media that can store program code, for example, a USB flash drive, a removable hard disk, a read-only memory (read only memory, ROM), a random access memory (random access memory, RAM), a magnetic disk, or an optical disc.

## Claims

1. A visualization method for an application icon, applied to an electronic device, wherein the method comprises:
determining (502, 602, 701) a second list based on a first list in a preset condition, wherein the first list comprises all applications installed on the electronic device, the second list comprises non-system applications of all said applications whose installation sources are not an application market, and the second list comprises a first application, wherein the first application is a non-system application whose installation source is not an application market;
determining (702), based on attribute information of the first application, whether the first application is a rogue application; and
in a case that the first application is a rogue application, replacing (703) an original icon corresponding to the first application with a preset icon (803), and displaying the preset icon (803) at an application icon location (802) of the first application on a desktop of the electronic device, wherein the preset icon (803) is used to remind a user of the rogue application.

2. The method according to claim 1, wherein
the second list does not comprise a determined rogue application.

3. The method according to claim 1 or 2, wherein the attribute information of the first application comprises an application name of the first application and an application icon of the first application, and the determining (702), based on attribute information of the first application, whether the first application is a rogue application comprises:
when the application name of the first application is empty and the application icon of the first application is transparent, determining (503) that the first application is a rogue application.

4. The method according to claim 1 or 2, wherein the attribute information of the first application comprises an action quantity and an action status of the first application, and the determining (702), based on attribute information of the first application, whether the first application is a rogue application comprises:
in a case that the action quantity of the first application is greater than 0 and the action status is disabled, the first application is a rogue application, wherein the action quantity is used to represent a quantity of to-be-executed actions of the first application, and the action status is used to represent a status of the to-be-executed action of the first application.

5. The method according to claim 3 or 4, wherein after the determining (702), based on attribute information of the first application, whether the first application is a rogue application, the method further comprises:
after preset duration, determining (505, 605) whether a white list comprises the first application, wherein the white list comprises a plurality of verified non-rogue applications; and
if the white list does not comprise the first application, the first application is a rogue application.

6. The method according to any one of claims 1-5, wherein the first list comprises application information of a plurality of applications, the application information comprises an application package, an application name, an application icon, a first flag bit, a second flag bit, and a third flag bit, the first flag bit is used to identify whether an application is a rogue application, the second flag bit is used to identify whether an application is a system application, and the third flag bit is used to identify an installation source of an application.

7. The method according to claim 6, wherein after the case that the first application is a rogue application, the method further comprises:
Updating (5033) a first flag bit that is of the first application and that is in the first list.

8. The method according to any one of claims 1-7, wherein the preset condition comprises that the electronic device is started and enters the desktop, an application on the electronic device returns to the desktop, an application is installed on the electronic device, and an application is uninstalled from the electronic device.

9. An electronic device (100), wherein the electronic device comprises a wireless communication module (160), a memory (121), and one or more processors (110), and the wireless communication module (160) and the memory (121) are coupled to the processor (110); wherein
the memory (121) is configured to store computer program code, the computer program code comprises computer instructions, and when the computer instructions are executed by the processor (110), the electronic device (100) is enabled to perform the method according to any one of claims 1-8.

10. A computer-readable storage medium, comprising computer instructions, wherein
when the computer instructions are run on a first device (100), the electronic device (100) is enabled to perform the method according to any one of claims 1-8.

## Patentansprüche

1. Visualisierungsverfahren für ein Anwendungssymbol, angewendet auf ein elektronisches Gerät, wobei das Verfahren umfasst:
Bestimmen (502, 602, 701) einer zweiten Liste basierend auf einer ersten Liste unter einer voreingestellten Bedingung, wobei die erste Liste alle auf dem elektronischen Gerät installierten Anwendungen umfasst, die zweite Liste Nicht-System-Anwendungen aller besagten Anwendungen umfasst, deren Installationsquellen kein Anwendungsmarkt sind, und die zweite Liste eine erste Anwendung umfasst, wobei die erste Anwendung eine Nicht-System-Anwendung ist, deren Installationsquelle kein Anwendungsmarkt ist;
Bestimmen (702), basierend auf Attributinformationen der ersten Anwendung, ob die erste Anwendung eine bösartige Anwendung ist; und
in einem Fall, in dem die erste Anwendung eine bösartige Anwendung ist, Ersetzen (703) eines ursprünglichen Symbols, das der ersten Anwendung entspricht, durch ein voreingestelltes Symbol (803) und Anzeigen des voreingestellten Symbols (803) an einem Anwendungssymbolort (802) der ersten Anwendung auf einem Desktop des elektronischen Geräts, wobei das voreingestellte Symbol (803) dazu dient, einen Benutzer auf die bösartige Anwendung hinzuweisen.

2. Verfahren nach Anspruch 1, wobei
die zweite Liste keine als bösartig bestimmte Anwendung umfasst.

3. Verfahren nach Anspruch 1 oder 2, wobei die Attributinformationen der ersten Anwendung einen Anwendungsnamen der ersten Anwendung und ein Anwendungssymbol der ersten Anwendung umfassen und das Bestimmen (702), basierend auf Attributinformationen der ersten Anwendung, ob die erste Anwendung eine bösartige Anwendung ist, umfasst:
wenn der Anwendungsname der ersten Anwendung leer ist und das Anwendungssymbol der ersten Anwendung transparent ist, Bestimmen (503), dass die erste Anwendung eine bösartige Anwendung ist.

4. Verfahren nach Anspruch 1 oder 2, wobei die Attributinformationen der ersten Anwendung eine Aktionsanzahl und einen Aktionsstatus der ersten Anwendung umfassen und das Bestimmen (702), basierend auf Attributinformationen der ersten Anwendung, ob die erste Anwendung eine bösartige Anwendung ist, umfasst:
in einem Fall, in dem die Aktionsanzahl der ersten Anwendung größer als 0 ist und der Aktionsstatus deaktiviert ist, die erste Anwendung eine bösartige Anwendung ist, wobei die Aktionsanzahl verwendet wird, um eine Anzahl von auszuführenden Aktionen der ersten Anwendung darzustellen, und der Aktionsstatus verwendet wird, um einen Status der auszuführenden Aktion der ersten Anwendung darzustellen.

5. Verfahren nach Anspruch 3 oder 4, wobei nach dem Bestimmen (702), basierend auf Attributinformationen der ersten Anwendung, ob die erste Anwendung eine bösartige Anwendung ist, das Verfahren ferner umfasst:
nach einer voreingestellten Dauer, Bestimmen (505, 605), ob eine Whitelist die erste Anwendung umfasst, wobei die Whitelist eine Vielzahl von verifizierten, nicht schädlichen Anwendungen umfasst; und
wenn die Whitelist die erste Anwendung nicht umfasst, ist die erste Anwendung eine schädliche Anwendung.

6. Verfahren nach einem der Ansprüche 1 bis 5, wobei die erste Liste Anwendungsinformationen einer Vielzahl von Anwendungen umfasst, wobei die Anwendungsinformationen ein Anwendungspaket, einen Anwendungsnamen, ein Anwendungssymbol, ein erstes Flag-Bit, ein zweites Flag-Bit und ein drittes Flag-Bit umfassen, wobei das erste Flag-Bit verwendet wird, um zu identifizieren, ob eine Anwendung eine schädliche Anwendung ist, das zweite Flag-Bit verwendet wird, um zu identifizieren, ob eine Anwendung eine Systemanwendung ist, und das dritte Flag-Bit verwendet wird, um eine Installationsquelle einer Anwendung zu identifizieren.

7. Verfahren nach Anspruch 6, wobei das Verfahren nach dem Fall, dass die erste Anwendung eine schädliche Anwendung ist, ferner umfasst:
Aktualisieren (5033) eines ersten Flag-Bits, das zu der ersten Anwendung gehört und sich in der ersten Liste befindet.

8. Verfahren nach einem der Ansprüche 1 bis 7, wobei die voreingestellte Bedingung umfasst, dass das elektronische Gerät gestartet wird und den Desktop aufruft, eine Anwendung auf dem elektronischen Gerät zum Desktop zurückkehrt, eine Anwendung auf dem elektronischen Gerät installiert wird und eine Anwendung vom elektronischen Gerät deinstalliert wird.

9. Elektronisches Gerät (100), wobei das elektronische Gerät ein drahtloses Kommunikationsmodul (160), einen Speicher (121) und einen oder mehrere Prozessoren (110) umfasst, und das drahtlose Kommunikationsmodul (160) und der Speicher (121) mit dem Prozessor (110) gekoppelt sind; wobei
der Speicher (121) dazu konfiguriert ist, Computerprogrammcode zu speichern, wobei der Computerprogrammcode Computeranweisungen umfasst, und wenn die Computeranweisungen vom Prozessor (110) ausgeführt werden, das elektronische Gerät (100) dazu befähigt wird, das Verfahren nach einem der Ansprüche 1 bis 8 durchzuführen.

10. Computerlesbares Speichermedium, das Computeranweisungen umfasst, wobei
wenn die Computeranweisungen auf einem ersten Gerät (100) ausgeführt werden, das elektronische Gerät (100) dazu befähigt wird, das Verfahren nach einem der Ansprüche 1 bis 8 durchzuführen.

## Revendications

1. Procédé de visualisation pour une icône d'application, appliqué à un dispositif électronique, dans lequel le procédé comprend :
la détermination (502, 602, 701) d'une seconde liste sur la base d'une première liste dans une condition prédéfinie, dans lequel la première liste comprend toutes les applications installées sur le dispositif électronique, la seconde liste comprend des applications non système parmi toutes lesdites applications dont les sources d'installation ne sont pas un marché d'applications, et la seconde liste comprend une première application, dans lequel la première application est une application non système dont la source d'installation n'est pas un marché d'applications ;
la détermination (702), sur la base d'informations d'attribut de la première application, si la première application est une application malveillante ; et
dans le cas où la première application est une application malveillante, le remplacement (703) d'une icône originale correspondant à la première application par une icône prédéfinie (803), et l'affichage de l'icône prédéfinie (803) à un emplacement d'icône d'application (802) de la première application sur un bureau du dispositif électronique, dans lequel l'icône prédéfinie (803) est utilisée pour rappeler à un utilisateur l'application malveillante.

2. Procédé selon la revendication 1, dans lequel
la seconde liste ne comprend pas d'application malveillante déterminée.

3. Procédé selon la revendication 1 ou 2, dans lequel les informations d'attribut de la première application comprennent un nom d'application de la première application et une icône d'application de la première application, et la détermination (702), sur la base des informations d'attribut de la première application, si la première application est une application malveillante comprend :
lorsque le nom d'application de la première application est vide et que l'icône d'application de la première application est transparente, la détermination (503) que la première application est une application malveillante.

4. Procédé selon la revendication 1 ou 2, dans lequel les informations d'attribut de la première application comprennent une quantité d'actions et un statut d'action de la première application, et la détermination (702), sur la base des informations d'attribut de la première application, si la première application est une application malveillante comprend :
dans le cas où la quantité d'actions de la première application est supérieure à 0 et le statut d'action est désactivé, la première application est une application malveillante, dans lequel la quantité d'actions est utilisée pour représenter une quantité d'actions à exécuter de la première application, et le statut d'action est utilisé pour représenter un statut de l'action à exécuter de la première application.

5. Procédé selon la revendication 3 ou 4, dans lequel après la détermination (702), sur la base des informations d'attribut de la première application, si la première application est une application malveillante, le procédé comprend en outre :
après une durée prédéfinie, déterminer (505, 605) si une liste blanche comprend la première application, dans laquelle la liste blanche comprend une pluralité d'applications vérifiées non malveillantes ; et
si la liste blanche ne comprend pas la première application, la première application est une application malveillante.

6. Procédé selon l'une quelconque des revendications 1 à 5, dans lequel la première liste comprend des informations d'application d'une pluralité d'applications, les informations d'application comprennent un paquet d'application, un nom d'application, une icône d'application, un premier bit indicateur, un deuxième bit indicateur et un troisième bit indicateur, le premier bit indicateur est utilisé pour identifier si une application est une application malveillante, le deuxième bit indicateur est utilisé pour identifier si une application est une application système, et le troisième bit indicateur est utilisé pour identifier une source d'installation d'une application.

7. Procédé selon la revendication 6, dans lequel après le cas où la première application est une application malveillante, le procédé comprend en outre :
Mettre à jour (5033) un premier bit indicateur qui appartient à la première application et qui se trouve dans la première liste.

8. Procédé selon l'une quelconque des revendications 1 à 7, dans lequel la condition prédéfinie comprend le fait que le dispositif électronique est démarré et accède au bureau, une application sur le dispositif électronique revient au bureau, une application est installée sur le dispositif électronique, et une application est désinstallée du dispositif électronique.

9. Dispositif électronique (100), dans lequel le dispositif électronique comprend un module de communication sans fil (160), une mémoire (121) et un ou plusieurs processeurs (110), et le module de communication sans fil (160) et la mémoire (121) sont couplés au processeur (110) ; dans lequel
la mémoire (121) est configurée pour stocker un code de programme informatique, le code de programme informatique comprend des instructions informatiques, et lorsque les instructions informatiques sont exécutées par le processeur (110), le dispositif électronique (100) est activé pour exécuter le procédé selon l'une quelconque des revendications 1 à 8.

10. Support de stockage lisible par ordinateur, comprenant des instructions informatiques, dans lequel
lorsque les instructions informatiques sont exécutées sur un premier dispositif (100), le dispositif électronique (100) est activé pour exécuter le procédé selon l'une quelconque des revendications 1 à 8.
